# EUROPÄISCHE PATENTSCHRIFT

(11) **EP 1 422 429 B1**
(45) Veröffentlichungstag und Bekanntmachung des Hinweises auf die Patenterteilung: **20.06.2007**
(21) Anmeldenummer: 03025552.5
(22) Anmeldetag: 08.11.2003
(51) Int. Cl.: F16C 11/06

(54) **Kugelgelenk**
Ball joint
Articulation à rotule

(30) Priorität: 22.11.2002 DE 10254768
(43) Veröffentlichungstag der Anmeldung: 26.05.2004
(73) Patentinhaber: HQM Sachsenring GmbH, 08058 Zwickau (DE)
(72) Erfinder: Strauch, Jürgen, Dipl. Ing., 08115 Lichtentanne (DE); Wackes, Ulrich, Dipl.-Ing., 08115 Lichtentanne (DE)
(74) Vertreter: Rumrich, Gabriele

(56) Entgegenhaltungen:
- EP-A- 0 563 610
- EP-A- 1 096 161
- WO-A-02/42652
- GB-A- 1 374 261
- US-A- 5 267 805

## Beschreibung

Die Erfindung betrifft ein Kugelgelenk mit einer gehäuseseitigen Abdichtung, welches ein Gehäuse zur Aufnahme einer beweglich gelagerten Kugel eines Kugelzapfens sowie einen zwischen dem Gehäuse und dem Kugelzapfen angeordneten Dichtungsbalg aufweist, dessen erster Dichtungsbalgrand an dem Schaft des Kugelzapfens abdichtend anliegt und dessen zweiter Dichtungsbalgrand zum Gehäuse hin abdichtet.

Bei derartigen Kugelgelenken, die beispielsweise in der Fahrzeugtechnik Anwendung finden, erfolgt die Befestigung des Dichtungsbalgrandes üblicher Weise an deren Außenkontur mittels Spannringen (DE 36 41 030 C1, DE 44 13 664 C2, DE 197 50 830 A1), wobei die Aufnahme des Dichtungsbalges direkt am Gehäuse integriert ist. Dies ist relativ aufwändig.

In der DE 44 12 597 C2 wird eine Lösung beschrieben, bei der das gehäuseseitige Dichtungsbalgende von einer außen radial umlaufenden Mulde der im Gehäuse angeordneten Lagerschale aufgenommen wird, wobei sich der Wulstrand des Dichtungsbalges radial nach außen gegen einen Bördelrand des Gehäuses. abstützt. Dadurch wird die Gefahr des Ausreißens verringert. Eine Befestigung mittels Spannring ist aber trotzdem unumgänglich.

Die DE 101 60 989 A1 zeigt eine Möglichkeit der gehäuseseitigen Befestigung des Dichtungsbalges ohne Spannring. Dabei ist in das Dichtungsbalgende ein Element, wie beispielsweise ein radial nach außen abgewinkelter Metallring, einvulkanisiert. Dieser radial nach außen gerichtete Bereich des Metallrings wird gegen den radial nach innen umgeformten Rollrand des Gehäuses gepresst.

Dadurch wird insbesondere durch den nach innen gerichteten, den Metallring umfassenden Rollrand des Gehäuses, wie es in dieser Druckschrift in Fig. 9 dargestellt ist, die Ausreißgefahr vermindert. Allerdings bedeutet die Einvulkanisierung des Metallringes in den Dichtungsbalg einen zusätzlichen Arbeitsschritt und damit eine aufwändige Herstellung.

Ein dem Oberbegriff des Anspruchs 1 entsprechendes Kugelgelenk ist aus der EP 1 096 161 A bekannt.

Aufgabe der Erfindung ist es, ein einfach herzustellendes Kugelgelenk mit einer einfachen gehäuseseitigen Abdichtung zu schaffen, die ein hohes Maß an Dichtheit und Ausreißsicherheit gewährleistet.

Diese Aufgabe wird erfindungsgemäß mit den Merkmalen des ersten Patentanspruches gelöst.

Das Kugelgelenk mit der gehäuseseitigen Abdichtung, weist ein Gehäuse zur Aufnahme einer, in einer Kugelschale beweglich gelagerten Kugel eines Kugelzapfens, sowie eine Dichtüngsbalgaufnahme auf, die erfindungsgemäß an einem separaten Bauteil ausgebildet ist, welches am Gehäuse befestigt ist. Das separate Bauteil ist als Verschleißring ausgebildet liegt an einer Auflagefläche des Gehäuses auf und spannt mit einer Zentrierkontur die Kugelschale gegen das Gehäuse vor. Weiter ist in einem Spalt zwischen Kugelschale und Gehäuse injiziertes, sich verfestigendes Material vorhanden.

Das separate Bauteil wird bevorzugt durch eine Umformverbindung oder eine formschlüssige Verbindung am Gehäuse befestigt.

Die Verbindung wird vorzugsweise durch ein erstes Formelement am Gehäuse und/oder durch ein zweites Formelemente am separaten Bauteil oder durch dritte Formelemente an einem

Verbindungsstück hergestellt.

Bevorzugt wird das separate Bauteil ringförmig ausgebildet und weist an seinem Außendurchmesser die

Dichtungsbalgaufnahme zur gehäuseseitigen Abdichtung auf.

Dieses separate ringförmig ausgebildete Bauteil wird erfindungsgemäß als Verschleißring ausgebildet und stellt somit Verschleißvolumen zur Verfügung, um ein Ausreissen der Kugel aus dem Gehäuse zu verhindern, auch wenn sich die Kugel aus der Kugelschale durch Überbeanspruchung gelöst hat.

Das erste Formelement am Gehäuse bzw. das zweite Formelement an dem separaten Bauteil (Verschleißring) sind bevorzugt als Rollrand ausgebildet. Befindet sich der Rollrand am Gehäuse, so wird er über einen, radial nach außen weisenden

Absatz des Verschleißringes radial nach innen umgeformt.

Ist der Rollrand an dem separaten Bauteil (Verschleißring) vorgesehen, so greift er nach der Umformung über einen radial nach außen weisenden Absatz des Gehäuses. Die nach außen weisenden Absätze des Gehäuses bzw. des separaten Bauteils (Verschleißring) sind bevorzugt an einer Nut ausgebildet. Die Nut des Verschleißrings dient dabei gleichzeitig zur Dichtungsbalgaufnahme für die gehäuseseitige Abdichtung.

Erfolgt. das Herstellen der Verbindung zwischen Verschleißring und Gehäuse mittels dritten Formelementen, die an einem Verbindungsstück vorgesehen sind, greifen die dritten Formelemente über einen Absatz am Gehäuse und über einem Absatz am Verschleißring.

Die den Kugelzapfen umschließende Öffnung des separaten Bauteils (Verschleißring) kann den Schwenkwinkel des Kugelzapfens angepasst (z.B. in Form einer Ellipse) sein. Zur lageorientierten Montage können zwischen Verschleißring und Gehäuse beliebig in Form und Anzahl, Zentrierhilfen angeordnet sein, welche entweder mit entsprechenden Zentrierhilfen des Gehäuses oder mit dem Montagewerkzeug gepaart werden können.

Die vom Gehäuse wegweisende, abschließende Fläche des Verschleißrings kann entweder parallel zum Rollrand oder in Richtung zum Kugelzapfen erhaben in Abhängigkeit zum Schwenkwinkel des Kugelzapfens ausgeführt sein, womit ein maximales Verschleißvolumen erzielbar ist. Die Dichtungsbalgaufnahme an dem separaten Bauteil (Verschleißring) kann im Querschnitt U-förmig, keilförmig oder in einer anderen für die Befestigung des Dichtungsbalges geeigneten Kontur ausgebildet sein. Es ist möglich, den Dichtungsbalg an dem separaten Bauteil (Verschleißring) durch Anvulkanisieren zu befestigen. Weiterhin ist es möglich den Verschleißring zur Massereduzierung an geeigneten Bereichen mit Aussparungen, Bohrungen oder ähnlichen zu versehen. Dazu kann z.B. der nach außenweisende Absatz des Verschleißrings, über welchen der Rollrand des Gehäuses greift, segmentiert ausgebildet sein.

Die Erfindung wird nachfolgend anhand von Ausführungsbeispielen und zugehörigen Zeichnungen näher erläutert.

Es zeigen:
- Fig.1:: Gehäuse mit dem darin in der Kugelschale positioniertem Kugelzapfen, wobei sich der Rollrand am Gehäuse befindet vor dem Einrollen,
- Fig.2:: Kugelgelenk gemäß Fig.1 nach dem Einrollen,
- Fig.3:: Gehäuse mit dem darin in der Kugelschale positioniertem Kugelzapfen, wobei sich der Rollrand am Verschleißring befindet,
- Fig.4:: Kugelgelenk gemäß Fig.3 nach dem Einrollen,
- Fig.5:: Gehäuse mit dem darin in der Kugelschale positioniertem Kugelzapfen, wobei sich der Rollrand an einem Verbindungsstück befindet.

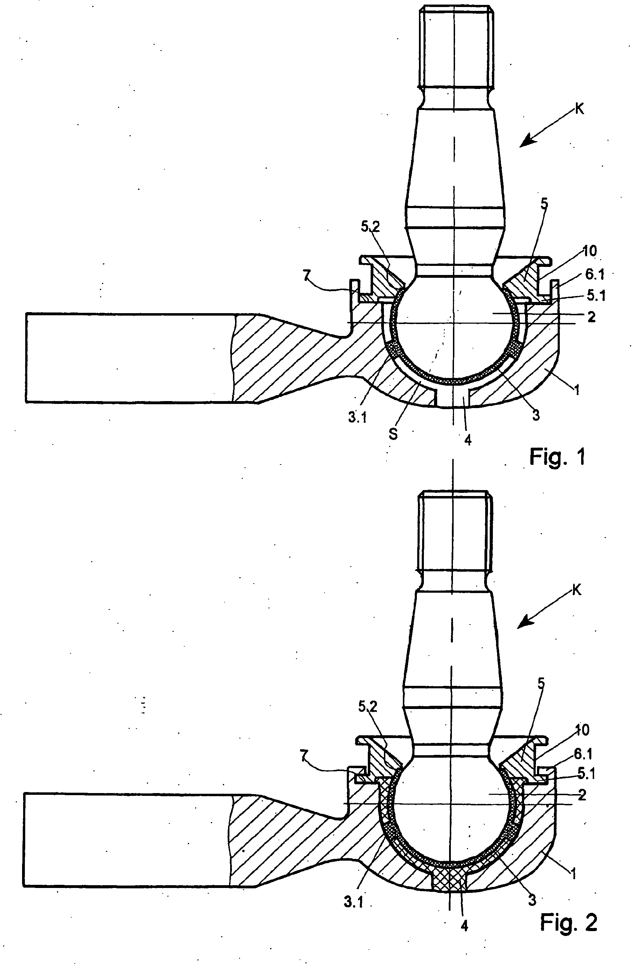

Gemäß Fig.1 wurde die Kugel 2 eines Kugelzapfens K in einer Kugelschale 3 gelagert und im Gehäuse 1 positioniert. Auf der in Richtung zum Kugelzapfen K weisenden Auflagefläche 7 des Gehäuses 1 liegt als separates Bauteil der Verschleißring 5 auf. Das Gehäuse 1 weist ein erstes Formelement 6.1 in Form eines Rollrandes auf, welcher nach oben in Richtung zum Kugelzapfen K weist. Am Verschleißring 5 ist in Richtung zum Gehäuse 1. ein Absatz 5.1 vorgesehen, der an einer Nut 10 ausgebildet ist, wobei die Nut 10 im Querschnitt U-förmig ist und zur späteren Aufnahme des Dichtungsbalges dient. An der Unterseite des Gehäuses 1 befindet sich ein Durchbruch 4, und zwischen der Außenseite der Kugelschale 3 und der Innenseite des Gehäuses 1 ist ein Spalt S vorhanden. Die Befestigung des Verschleißringes 5 erfolgt nun durch Einrollen des ersten Formelementes 6.1 (Rollrand) in Pfeilrichtung radial nach innen, so dass dieser über den Absatz 5.1 des Verschleißringes 5 greift. Dabei wird gleichzeitig eine Zentrierkontur 5.2 des Verschleißringes 5 gegen die Kugelschale 3 gepresst, so dass die Kugelschale 3 gegen das Gehäuse 1 vorgespannt wird. An der Kugelschale 3 sind dazu Zentrierelemente 3.1 angeordnet, die an der Innenkontur des Gehäuses 1 anliegen. Nach dem Einrollen wird durch den Durchbruch 4 an der Unterseite des Gehäuses 1 ein injizierfähiges, sich nach den Injizieren verfestigendes Material (bevorzugt Kunststoff) in den Spalt S zwischen Gehäuse 1 und Kugelschale 3 gepresst.

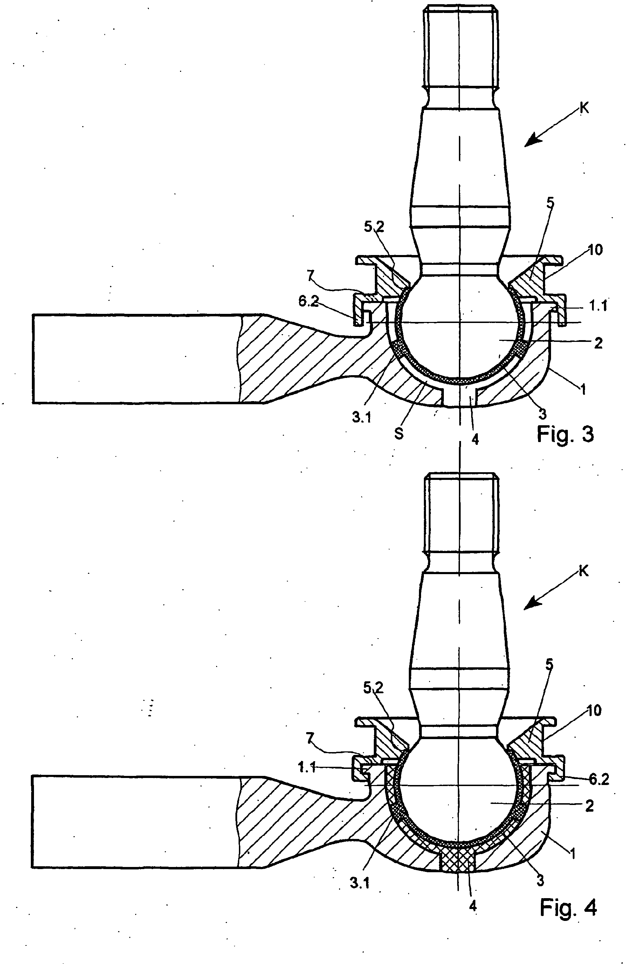

Eine alternative Befestigung des Verschleißringes wird in Fig. 3 und 4-vorgeschlagen, dabei liegt gemäß Fig. 3 der Verschleißring 5 ebenfalls auf der Auflagefläche 7 des Gehäuses 1 auf. Das Gehäuse 1 weist einen radial nach außen gerichteten Absatz 1.1 auf. Der Verschleißring 5 besitzt das zweite Formelement 6.2 in Form eines Rollrandes, welcher vor dem Einrollen achsparallel zur Achse des Kugelzapfens K ausgerichtet ist und in Richtung zum Boden des Gehäuses 1 weist. Das Kugelgelenk K wird nach dem Einrollen des zweiten Formelementes 6.2 (Rollrand) in Fig. 4 gezeigt. Das zweite Formelement 6.2 (Rollrand) wurde radial nach innen umgeformt und greift über den Absatz 1.1 des Gehäuses 1.

Analog Fig.2 spannt ebenfalls eine Zentrierkontur 5.2 des Verschleißringes 5 die Kugelschale 3 über Zentrierelemente 3.1 gegen das Gehäuse 1 vor. Abschließend wird ebenfalls durch den bodenseitigen Durchbruch 4 des Gehäuses 1 das injizierfähige und sich nach dem Injizieren verfestigende Material (z.B. Kunststoff) in den Zwischenraum (Spalt S) zwischen Kugelschale 3 und Gehäuseinnenseite eingebracht. An der Nut 10 des Verschleißringes 5 kann nun ein Dichtungsbalg befestigt werden.

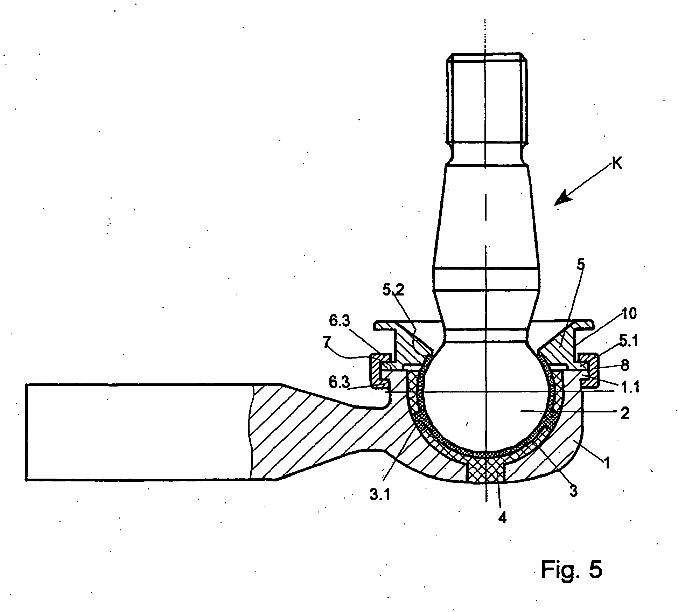

Eine weitere Ausführungsvariante zeigt Fig.5, dabei wird die Verbindung zwischen Verschleißring 5 und Gehäuse 1 über ein Verbindungsstück 8 hergestellt. Das Verbindungsstück 8 weist dritte Formelemente 6.3 auf, die einerseits über einen Absatz 5.1 des Verschleißrings 5 und andererseits über einen Absatz 1.1 des Gehäuses 1 greifen. Dies kann ebenfalls durch Einrollen erfolgen. Es ist alternativ möglich, das Verbindungsstück in der Art einer ein- oder mehrteiligen Klammer herzustellen und über die Absätze 1.1 und 5.1 zu klemmen.

## Patentansprüche

1. Kugelgelenk mit einer gehäuseseitigen Abdichtung, wobei das Kugelgelenk ein Gehäuse (1) zur Aufnahme einer, in einer Kugelschale (3) beweglich gelagerten Kugel (2) eines Kugelzapfens (K) aufweist, sowie eine Dichtungsbalgaufnahme zur gehäuseseitigen Abdichtung, die an einem separaten, am Gehäuse (1) befestigten Verschleißring (5) ausgebildet ist, **dadurch gekennzeichnet, dass** der Verschleißring mit einer Zentrierkontur (5.1, 5.2) die Kugelschale (3) gegen das Gehäuse (1) vorspannt und dass injiziertes, sich verfestigendes Material in einem Spalt (S) zwischen Gehäuse (1) und Kugelschale (3) vorhanden ist.

2. Kugelgelenk nach Anspruch 1, **dadurch gekennzeichnet, dass** Verschleißring, welcher zur gehäuseseitigen Dichtungsbalgaufnahme dient, durch eine Umformverbindung oder eine formschlüssige Verbindung am Gehäuse (1) befestigt ist.

3. Kugelgelenk nach Anspruch 1 oder 2, **dadurch gekennzeichnet, dass** die Verbindung durch ein erstes Formelement (6.1) am Gehäuse (1) und/oder durch ein zweites Formelement (6.2) am -separaten Verschleißring hergestellt ist.

4. Kugelgelenk nach Anspruch 1, oder 2, **dadurch gekennzeichnet, dass** die Verbindung durch dritte Formelemente (6.3) an einem Verbindungsstück (8) hergestellt ist.

5. Kugelgelenk nach einem der Ansprüche 1 bis 4, **dadurch gekennzeichnet, dass** das zweite Formelement (6.2) als ein Rollrand am Verschleißring (5) ausgebildet ist und über einen, radial nach außen weisenden Absatz (1.1) des Gehäuses (1) greift.

6. Kulgelgelenk nach Anspruch 5, **dadurch gekennzeichnet, dass** der Absatz (1.1) des Gehäuses (1) an einer Nut ausgebildet ist.

7. Kugelgelenk nach einem der Ansprüche 4 bis 6, **dadurch gekennzeichnet, dass** dritte Formelemente (6.3) am Verbindungsstück (8) über einen Absatz (1.1) am Gehäuse (1) und über einem Absatz (5.1) am Verschleißring (5) greifen.

8. Kugelgelenk nach einem der Ansprüche 1 bis 7, **dadurch gekennzeichnet, dass** am Verschleißring (5) Zentrierhilfen angeordnet sind.

9. Kugelgelenk nach Anspruch 8, **dadurch gekennzeichnet, dass** zwischen Verschleißring (5) und Gehäuse (1) Zentrierhilfen angeordnet sind.

10. Kugelgelenk nach einem der Ansprüche 1 bis 9, **dadurch gekennzeichnet, dass** der Verschleißring einen Anschlag für das zwischen Kugelschale (3) und Gehäuse (1) injizierte und sich nach dem injizieren verfestigende Material (4) bildet.

## Claims

1. A ball-and-socket joint having a housing-side seal, the ball-and-socket joint having a housing (1) for receiving a ball (2), which is mounted so it is movable in a ball socket (3), of a ball pivot (K), as well as a seal bellows receptacle for the housing-side seal, which is implemented on a separate wear ring (5) attached to the housing (1), **characterized in that** the wear ring pre-tensions the ball socket (3) against the housing (1) using a centering contour (5.1, 5.2), and injected, solidifying material is provided in a gap (S) between housing (1) and ball socket (3).

2. The ball-and-socket joint according to Claim 1, **characterized in that** the wear ring, which is used for the housing-side seal bellows receptacle, is attached to the housing (1) by a deforming connection or a formfitting connection.

3. The ball-and-socket joint according to Claim 1 or 2, **characterized in that** the connection is produced by a first molded element (6.1) on the housing (1) and/or by a second molded element (6.2) on the separate wear ring.

4. The ball-and-socket joint according to Claim 1 or 2, **characterized in that** the connection is produced by third molded elements (6.3) on a connection part (8).

5. The ball-and-socket joint according to one of Claims 1 through 4, **characterized in that** the second molded element (6.2) is implemented as a rolled bead on the wear ring (5) and engages via a shoulder (1.1) of the housing (1) which projects radially outward.

6. The ball-and-socket joint according to Claim 5, **characterized in that** the shoulder (1.1) of the housing (1) is implemented on a groove.

7. The ball-and-socket joint according to one of Claims 4 through 6, **characterized in that** third molded elements (6.3) on the connection part (8) engage via a shoulder (1.1) on the housing (1) and via a shoulder (5.1) on the wear ring (5).

8. The ball-and-socket joint according to one of Claims 1 through 7, **characterized in that** centering aids are situated on the wear ring (5).

9. The ball-and-socket joint according to Claim 8, **characterized in that** centering aids are situated between wear ring (5) and housing (1).

10. The ball-and-socket joint according to one of Claims 1 through 9, **characterized in that** the wear ring forms a stop for the material (4), which is injected between ball socket (3) and housing (1) and solidifies after the injection.

## Revendications

1. Articulation à rotule avec une étanchéité du côté du logement, laquelle articulation à rotule possède un logement (1) pour recevoir une rotule (2) d'un pivot sphérique (K) mobile dans une coque sphérique (3), ainsi qu'un logement de soufflet d'étanchéité pour l'étanchéité du côté du logement, qui est formé sur une bague d'usure (5) séparée fixée au logement (1), **caractérisée en ce que** la bague d'usure précontraint la coque sphérique (3) contre le logement (1) avec un périmètre de centrage (5.1, 5.2) et **en ce qu'**un matériau injecté qui se solidifie est présent dans un interstice (S) entre le logement (1) et la coque sphérique (3).

2. Articulation à rotule selon la revendication 1, **caractérisée en ce que** la bague d'usure servant à recevoir le soufflet d'étanchéité du côté du logement est fixée au logement (1) par un assemblage par déformation ou un assemblage en correspondance de forme.

3. Articulation à rotule selon la revendication 1 ou 2, **caractérisée en ce que** l'assemblage est formé par un premier élément de forme (6.1) sur le logement (1) et/ou par un deuxième élément de forme (6.2) sur la bague d'usure séparée.

4. Articulation à rotule selon la revendication 1 ou 2, **caractérisée en ce que** l'assemblage est réalisé par des troisièmes éléments de forme (6.3) sur une pièce d'assemblage (8).

5. Articulation à rotule selon l'une des revendications 1 à 4, **caractérisée en ce que** le deuxième élément de forme (6.2) est conformé comme un bord roulé sur la bague d'usure (5) et se met en prise par-dessus un épaulement (1.1) du logement (1) orienté vers l'extérieur dans le sens radial.

6. Articulation à rotule selon la revendication 5, **caractérisé en ce que** l'épaulement (1.1) du logement (1) est formé sur une gorge.

7. Articulation à rotule selon l'une des revendications 4 à 6, **caractérisée en ce que** des troisièmes éléments de forme (6.3) sur la pièce d'assemblage (8) se mettent en prise par-dessus un épaulement (1.1) du logement (1) et un épaulement (5.1) de la bague d'usure (5).

8. Articulation à rotule selon l'une des revendications 1 à 7, **caractérisée en ce que** des aides au centrage sont disposées sur la bague d'usure (5).

9. Articulation à rotule selon la revendication 8, **caractérisée en ce que** des aides au centrage sont disposées entre la bague d'usure (5) et le logement (1).

10. Articulation à rotule selon l'une des revendications 1 à 9, **caractérisée en ce que** la bague d'usure forme une butée pour le matériau (4) injecté entre la coque sphérique (3) et le logement (1) et se solidifiant après l'injection.
